# EUROPÄISCHE PATENTANMELDUNG

(11) **EP 1 698 856 A2**
(43) Veröffentlichungstag der Anmeldung: **06.09.2006**
(21) Anmeldenummer: 06075487.6
(22) Anmeldetag: 01.03.2006
(51) Int. Cl.: G01C 11/02

(54) **Verfahren und Anordnung Gewinnen von Fernerkundungsdaten**

(30) Priorität: 02.03.2005 DE 102005010155
(71) Anmelder: Deutsches Zentrum für Luft- und Raumfahrt e.V., 51147 Köln (DE)
(72) Erfinder: Borg, Erik, 16247 Joachimsthal (DE); Fichelmann, Bernd, 17235 Neustrelitz (DE)
(74) Vertreter: Effert, Bressel und Kollegen

(57) **Zusammenfassung**

Die Erfindung betrifft ein Verfahren und eine Anordnung zum Gewinnen von Fernerkundungsdaten, insbesondere durch einen Satelliten. Es wird eine erste Sensoreinrichtung (SE) verwendet, die erste Fernerkundungsdaten erzeugt (in Satellit S1). Ferner wird eine zweite Sensoreinrichtung (SE) verwendet, die zweite Fernerkundungsdaten erzeugt (in Satellit S2) und die schwenkbar ist. Durch Auswertung der ersten Fernerkundungsdaten (z. B. in der Bodenstation GS) wird ermittelt, ob und/oder bis zu welchem Grad Daten eines Zielgebiets und optional möglicher Ausweichziele, von dem bzw. denen durch die zweite Sensoreinrichtung die zweiten Fernerkundungsdaten aufgenommen werden sollen, nutzbar sind. Ein Aufnahmegebiet, von dem die zweiten Fernerkundungsdaten aufgenommen werden, wird durch Schwenken der zweiten Sensoreinrichtung eingestellt.

## Beschreibung

Die Erfindung betrifft ein Verfahren und eine Anordnung zum Gewinnen von Fernerkundungsdaten, insbesondere Fernerkundungsdaten, die durch einen Satelliten von einem Beobachtungsgebiet auf einem Planeten aufgenommen werden. Die Erfindung ist jedoch nicht auf die Nutzung von Satelliten beschränkt. Es können beispielsweise auch Raumstationen, hoch fliegende Flugzeuge und Ballons verwendet werden.

Es ist bei der Nutzung von Fernerkundungsdaten üblich, ein Zielgebiet vorzugeben und nach der Gewinnung der Fernerkundungsdaten diejenigen Daten auszuwählen, die das Zielgebiet betreffen. Dabei kann außerdem ein Zeitraum vorgegeben werden, in dem Daten des Zielgebiets aufgenommen werden sollen. Nachdem ein Zielgebiet von einem vorbei fliegenden Satelliten aufgenommen wurde, können dann die Daten auf das Zielgebiet begrenzt ausgewählt werden und gegebenenfalls nach einer von dem Benutzer vorgegebenen Prozessierung der Daten zur Verfügung gestellt werden.

Bei der Gewinnung von Fernerkundungsdaten steht der Einsatz einer neuen Generation von Sensoreinrichtungen zur Aufnahme der Fernerkundungsdaten bevor, wobei die Sensoreinrichtungen spektral sehr hoch aufgelöste Daten erzeugen. Beispielsweise kann ein einzelner Sensor der Sensoreinrichtung einfallende elektromagnetische Strahlung innerhalb einer spektralen Bandbreite von wenigen Nanometer detektieren. Die Folge ist eine hohe Menge von spektral hoch aufgelösten Informationen über das Zielgebiet der Fernerkundung. Ob diese Daten, bedingt durch die verschiedensten Ursachen überhaupt nutzbar sind, wird erst im sich anschließenden Verarbeitungsprozess entschieden.

DD 296 154 A5 beschreibt ein Verfahren zur Gewinnung von Fernerkundungsdaten, mit dem die zu verarbeitende Datenmenge ohne inhaltliche Einschränkung der Benutzerinformation minimiert werden soll. Die Aufnahmeanordnung einen meteorologischen Sensor sowie einen Sensor zur Gewinnung von Vorfeldinformationen.

DD 296 155 A5 beschreibt ein Verfahren zur Gewinnung von Fernerkundungsdaten, mit dem die zu verarbeitende Datenmenge ohne inhaltliche Einschränkung der Benutzerinformation minimiert werden soll. Bezogen auf eine zu betrachtende Szene wird eine Vorfeldinformation gewonnen, welche jeweils typische radiometrische, spektrale und geometrische Merkmale der später aufzunehmenden Szene erfasst. Ausgehend von den Ergebnissen der Vorfeldinformationsgewinnung erfolgt eine Grobklassifizierung und Ableitung von Steuersignalen zur Selektion der aufzunehmenden spektralen Kanäle und Einstellung der Empfindlichkeitsbereiche. Weiterhin erfolgt im Ergebnis der Auswertung der Vorfeldinformation die Einleitung der an Bord durchzuführenden Datenkompression und Datenreduktion durch die Bereitstellung von entsprechenden Steuersignalen.

DD 296 175 A5 beschreibt ein Verfahren zur Gewinnung von Fernerkundungsdaten, mit dem die zu verarbeitende Datenmenge ohne inhaltliche Einschränkung der Benutzerinformation minimiert werden soll. Ein erster Spezialprozessor enthält Mittel zur geometrischen Korrektur der Bilddaten sowie Mittel zur Analyse der aus einem Vorfeldsensor des Sensorsystems gewonnenen Vorfeldinformation. Vom Ausgang des ersten Spezialprozessors werden über den Steuerrechner Steuerinformationen für das Sensorsystem bereitgestellt. Ein zweiter Spezialprozessor enthält Mittel zur nutzerspezifischen bzw. aus der Analyse der Vorfeldinformation ableitbaren Datenkompression und Bildvorverarbeitung. Der erste Spezialprozessor dient der Auswertung der Daten des Vorfeldsensors, der dazugehörenden Korrektur der Sensordaten, der Analyse zur Bestimmung der Aufnahmebedingungen und Objektmerkmale sowie die Ausgabe der Daten für Steuerung und Programmierung des Sensorsystems an den Steuerrechner. Die Auswertung der Daten des Vorfeldsensors bezieht sich auf die Analyse bestimmter Szenencharakteristika, wie mittlere Bildhelligkeit, Varianzen, Korrelationslängen usw. sowie atmosphärischer Effekte und liefert Daten für eine Steuerung und thematische Programmierung des Hauptfeldsensors. Diese Daten werden dem Steuerrechner zugeführt, der daraus Steuersignalen für das Sensorsystem (Empfindlichkeitsregelung, Auslesetakt, Selektion der spektralen Information usw.) generiert.

T. Algra: On the Effectiveness of Cloud Cover Avoidance Methods in Support of the Super-spectral Mission for Land Applications, veröffentlicht in: Geoscience and Remote Sensing Symposium, 2002, IGARSS 2002, Band 2, Seiten 982 bis 985, beschreibt das Konzept der selektiven Bildaufnahme (selective imaging), welches bedeutet, dass lediglich ausgewählte Teile der Daten, die während des Überfluges aufgezeichnet werden, an Bord gespeichert werden. Eine Variante davon ist das selektive Herunterladen, wobei alle Bilddaten an Bord gespeichert werden, aber lediglich nicht wolkenbedeckte Teile der Daten heruntergeladen werden. Dies erfolgt auf der Basis der tatsächlichen Wolkensituation.

DE 42 16 828 C2 beschreibt ein Verfahren zur Erdbeobachtung, wobei von einem ersten raumgestützten Beobachtungssensor kontinuierlich ein Ausschnitt des überflogenen Geländes erfasst wird. Teile des überflogenen Gebiets werden Nutzern, in deren Sichtbarkeitsbereich sich der Satellit befindet, in Echtzeit in einfacher Qualität zur Auswahl kundenspezifischer Messziele angeboten. Die Nutzer können sich innerhalb einer vorgegebenen Zeit entscheiden, welche Teildaten, unter welchen beobachtungstechnischen Randbedingungen (z. B. geometrische Auflösung, spektrale Kanäle, Messort, Größe des Gebiets) an ihre Bodenstation in nahezu Echtzeit noch im Verlauf des aktuellen Überfluges übertragen und am Boden aufgezeichnet werden sollen. Eine globale bordseitige Aufzeichnung von Daten ist nicht notwendig. Die Zusammenstellung der jeweiligen kundenspezifischen Daten erfolgt bordseitig auf Telekommando durch die Kunden selbst. Von einem zweiten raumgestützten Beobachtungssensor, dessen Beobachtungsbereich dem des ersten Beobachtungssensors nacheilt, werden die aus den Beobachtungsdaten des ersten Beobachtungssensors ausgewählten Geländeausschnitte erfasst. Nicht vom Nutzer angeforderte Daten, die im Raumsegment zur Verfügung stehen, werden nicht übertragen. Die beiden Beobachtungssensoren müssen nicht notwendigerweise auf demselben raumgestützten Träger vorhanden sein.

Es ist eine Aufgabe der vorliegenden Erfindung, die Gewinnung von nutzbaren Fernerkundungsdaten, insbesondere von spektral hoch aufgelösten Daten, zu optimieren. Ein möglichst hoher Anteil der Fernerkundungsdaten, die prinzipiell von einem Sensor aufgenommen werden können, soll für die Missionsziele des Satelliten nutzbar sein.

Es wird vorgeschlagen, aktuelle Fernerkundungsdaten eines Beobachtungsgebiets auszuwerten und abhängig von einem Ergebnis der Auswertung die Gewinnung weiterer Fernerkundungsdaten zu steuern. Zur Gewinnung der Daten wird eine weitere Sensoreinrichtung entsprechend verschwenkt. Die Nutzung und/oder Gewinnung aktueller Fernerkundungsdaten eines potentiellen Zielgebiets eines Fernerkundungssensors ermöglicht vor allem im Hinblick auf eine Wolkenbedeckung eine zeitnahe Optimierung der Gewinnung nutzbarer Daten, wobei gegebenenfalls auf andere Zielgebiete ausgewichen werden kann.

Insbesondere wird ein Verfahren zum Gewinnen von Fernerkundungsdaten vorgeschlagen, wobei
a) eine erste Sensoreinrichtung verwendet wird, die erste Fernerkundungsdaten erzeugt,
b) eine schwenkbare zweite Sensoreinrichtung verwendet wird, die zweite Fernerkundungsdaten erzeugt,
c) durch Auswertung der ersten Fernerkundungsdaten (insbesondere an Bord eines Flugobjekts, das die erste und/oder die zweite Sensoreinrichtung trägt) ermittelt wird, ob und/oder bis zu welchem Grad Daten eines Zielgebiets und optional möglicher Ausweichziele, von dem bzw. denen durch die zweite Sensoreinrichtung die zweiten Fernerkundungsdaten aufgenommen werden sollen, nutzbar sind, und
d) ein Aufnahmegebiet, von dem die zweiten Fernerkundungsdaten aufgenommen werden, durch Schwenken der zweiten Sensoreinrichtung eingestellt wird.

Allgemeiner formuliert wird die Gewinnung der zweiten Fernerkundungsdaten abhängig von einem Ergebnis der Auswertung der ersten Fernerkundungsdaten automatisch gesteuert. Insbesondere kann ein Zielgebiet für die Gewinnung der zweiten Fernerkundungsdaten automatisch angesteuert werden, indem die zweite Sensoreinrichtung abhängig von dem Ergebnis der Auswertung automatisch ausgerichtet wird. Dabei kann eine Drehachse, um die die zweite Sensoreinrichtung verschenkt werden kann, in Flugrichtung des Flugobjekts liegen, an dem die zweite Sensoreinrichtung angebracht ist.

Unter einem Zielgebiet wird hier ein Gebiet verstanden, das für eine Erfassung der Fernerkundungsdaten bereits vorgesehen ist, oder dafür in Frage kommt.
Aufgrund der Verschwenkbarkeit der zweiten Sensoreinrichtung kann diese Sensoreinrichtung in dem überhaupt für Aufnahmen zur Verfügung stehenden Zeitraum optimal genutzt werden. Ist z. B. ein bestimmtes Zielgebiet bei einem Überflug eines Satelliten wolkenbedeckt oder sind Daten des Zielgebiets aus anderen Gründen (z. B. fehlende Sonneneinstrahlung) nicht nutzbar, kann dies durch eine Auswerteeinheit detektiert werden und kann die zweite Sensoreinrichtung auf ein anderes potentielles Gebiet (zum Beispiel entsprechend einer Prioritätenliste) gerichtet werden, um so den zweiten Sensor für die Gewinnung überhaupt nutzbarer Daten optimal auszuschöpfen. Wenn detektiert wird, dass von keinem Teilgebiet des von der ersten Sensoreinrichtung aufgenommenen Gebiets nutzbare Fernerkundungsdaten aufgenommen werden können bzw. dass sich die Aufnahme mit der zweiten Sensoreinrichtung (momentan) nicht lohnt, kann die zweite Sensoreinrichtung zumindest temporär abgeschaltet werden bzw. deaktiviert werden.

Unter der "Schwenkbarkeit" eines Sensors wird jede Möglichkeit der Ausrichtung des Sensors (d.h. des von dem Sensor erfassbaren Raumwinkelbereichs) verstanden. Beim Schwenken kann zusätzlich zu einer Drehung des Sensors auch eine Verschiebung auftreten. Auch kann das Schwenken z. B. durch eine Veränderung der Ausrichtung einer Optik herbeigeführt werden, die einfallende Strahlung auf den Sensor ablenkt und/oder fokussiert.

In der Regel werden Sensoreinrichtungen an einem Flugobjekt oder an verschiedenen Flugobjekten angebracht, der bzw. die das Gebiet überfliegen, von dem Fernerkundungsdaten aufgenommen werden können. Die erste Sensoreinrichtung und die zweite Sensoreinrichtung haben daher jeweils die Möglichkeit, Daten von einem Gebiet aufzunehmen, das quer zur Flugrichtung des Flugobjekts eine bestimmte Beobachtungsbreite (Schwadbreite) hat. Vorzugsweise weist die erste Sensoreinrichtung eine erste Schwadbreite auf, die eine Breite eines Gebiets ist, das von der ersten Sensoreinrichtung erfasst wird (zum Beispiel bei einem Überflug des Zielgebiets in etwa Süd-Nord-Richtung). Das potentielle Aufnahmegebiet der zweiten Sensoreinrichtung hat dabei eine kleinere Schwadbreite als die erste Schwadbreite. Z. B. kann die zweite Sensoreinrichtung innerhalb des gesamten, durch die erste Schwadbreite definierten Gesamt-Zielgebiets verschwenkt werden, d.h. insbesondere beliebige Teilgebiete in dem von der ersten Sensoreinrichtung erfassten Gebietes erfassen.

Die Nutzbarkeit der Daten des Zielgebiets hängt insbesondere von einer Wolkenbedeckung des Zielgebiets ab. Beispielsweise kann durch die Auswertung festgestellt werden, dass das Zielgebiet oder ein Teil davon von Wolken bedeckt ist, wobei die Bedeckung z. B. noch den teilweisen Durchtritt von Strahlung erlaubt oder nicht mehr erlaubt.

Vorzugsweise sind die erste und die zweite Sensoreinrichtung jeweils Teil eines Satelliten eines Planeten (insbesondere eines Erd-Satelliten, der die Erde auf einer Umlaufbahn umläuft). Dabei umfasst die Erfindung den Fall, dass die erste und die zweite Sensoreinrichtung in und/oder an verschiedenen Satelliten angeordnet sind, und den Fall, dass die erste und die zweite Sensoreinrichtung an und/oder in demselben Satelliten angeordnet sind.

Die erste und die zweite Sensoreinrichtung können jeweils einen oder mehrere einzelne Sensoren zur Aufnahme von Fernerkundungsdaten aufweisen.

Der Begriff "Gewinnung von Fernerkundungsdaten" schließt insbesondere die Aufnahme der Fernerkundungsdaten durch einen oder mehrere Sensoren (z. B. mit einer Matrix von strahlungsempfindlichen Sensorelementen), die Speicherung der aufgenommenen Fernerkundungsdaten (insbesondere in einer Speichereinrichtung eines Satelliten, der die Sensoreinrichtung aufweist) und die Übertragung (insbesondere Fern-Übertragung von dem Satelliten zu einer Bodenstation) der aufgenommenen und/oder gespeicherten Fernerkundungsdaten ein. Dementsprechend ist es insbesondere möglich, abhängig von dem Ergebnis der Auswertung der ersten Fernerkundungsdaten,
- das Zielgebiet für die Aufnahme der zweiten Fernerkundungsdaten auszuwählen, einzuschränken, zu erweitern, zu verlegen und/oder in sonstiger Weise zu beeinflussen (z. B. durch Schwenken der zweiten Sensoreinrichtung),
- einen Zeitpunkt und/oder Zeitraum der Aufnahme der zweiten Fernerkundungsdaten zu bestimmen (z. B. Beginn, Ende und/oder Dauer der Aufnahme),
- die Speicherung der aufgenommenen zweiten Fernerkundungsdaten zu steuern (z. B. aufgenommene Fernerkundungsdaten nicht oder nur teilweise zu speichern oder bereits gespeicherte Fernerkundungsdaten beispielsweise nach einer an Bord des Satelliten vorgenommenen Auswertung der zweiten Fernerkundungsdaten zumindest teilweise wieder zu löschen),
- die Übertragung der gespeicherten und/oder aufgenommenen zweiten Fernerkundungsdaten von der Sensoreinrichtung und/oder der Speichereinrichtung zu steuern (z. B. nur ausgewählte Fernerkundungsdaten zu übertragen).

Für die Steuerung der Gewinnung der zweiten Fernerkundungsdaten kann eine Funktionalität genutzt werden, die bisher (bei bekannten Verfahren der Gewinnung von Fernerkundungsdaten) mit der Absicht realisiert wurde, Fernerkundungsdaten von bestimmten Zielgebieten in relativ kurzen zeitlichen Abständen aufzunehmen: das Schwenken der Sensoreinrichtung, sodass dessen Blickrichtung von der Nadir-Blickrichtung abweicht. Bisher wurde dabei aber in Kauf genommen, dass wegen Wolkenbedeckung auch nicht nutzbare Daten aufgenommen werden.

Das Schwenken der Sensoreinrichtung kann nun generell bei der Steuerung der Datengewinnung eingesetzt werden. Speziell für den vorgenannten Fall der wiederholten Beobachtung eines bestimmten Zielgebiets kann jeweils vor der Wiederholung einer Aufnahme des Zielgebiets (z. B. bei dem nächsten Umlaufzyklus eines Satelliten) wieder geprüft werden, ob nutzbare Daten gewonnen werden können. Gegebenenfalls kann entschieden werden, dass auf eine bestimmte Wiederholung der Aufnahme ganz oder teilweise verzichtet wird. Auf diese Weise kann der Einsatz des Sensors optimiert werden. Unter Umständen kann bei Wolkenkontamination des Zielgebietes der Sensor abgeschaltet werden. Bei einem senkrecht zur Flugrichtung schwenkbaren Sensor (beispielsweise um mehr als das 20-fache der Sensorschwadbreite) kann ein anderes Zielgebiet gemäß einer vorgegebenen Reihenfolge von möglichen Zielgebieten ausgewählt werden, wobei für dieses Zielgebiet die Aufnahme nutzbarer Daten prognostiziert wurde.

Der Erfindung liegt die Erkenntnis zugrunde, dass auf Grund der zunehmenden Datenmenge beim Einsatz von spektral hoch auflösenden Sensoreinrichtungen wesentlich kleinere Beobachtungsgebiete von den Fernerkundungsdaten erfasst werden können. Entsprechende Randbedingungen werden durch die Speicherkapazität am Aufnahmeort (z. B. Satellit), durch die Übertragungskapazität vom Aufnahmeort zu einem anderen Ort (zum Beispiel einer Bodenstation) und durch die begrenzte am Aufnahmeort zur Verfügung stehende Energie gesetzt.

Die Erfindung betrifft insbesondere hochkanalige, radiometrisch hoch auflösende optische Sensoreinrichtungen auf Fernerkundungssatelliten (beispielsweise so genannte hyperspektrale Sensoreinrichtung mit z. B. 30 m geometrischer Auflösung, etwa 30 km Schwadbreite und 200 spektralen Kanälen), mit denen eine mittlere bis hohe geometrische Auflösung erzielt werden soll. Derartige Sensoreinrichtungen haben technisch bedingt eine relativ geringe Schwadbreite. Beispielsweise kann eine Sensoreinrichtung der neuen Generation lediglich ein Zielgebiet mit einer Schwadbreite von etwa 30 km erfassen und können von einem Satelliten auf Grund der begrenzten Dauer des Funkkontaktes zu einer Bodenstation und/oder auf Grund der begrenzten Daten-Speicherkapazität lediglich Daten einer Passlänge des beobachteten Gebiets von etwa 1200 km pro Erd-Umlauf geliefert werden.

Bei einer relativ hohen Wolkenbedeckung eines gewünschten Zielgebiets können keine nutzbaren Daten davon gewonnen werden.

Auf Grund einer Auswertung der aktuellen Fernerkundungsdaten (die beispielsweise von einem oder mehreren anderen Satelliten stammen, welche kurz zuvor ein mögliches Beobachtungsgebiet überflogen haben) können Verdeckungen (durch Wolken oder andere Einflüsse) des gewünschten Zielgebiets und/oder von alternativen Zielgebieten im Vorhinein ermittelt werden. Durch Steuerung der DatenGewinnung kann somit vermieden werden, dass unbrauchbare Daten gewonnen werden. Zumindest kann die Gewinnung solcher Daten reduziert werden. Im Extremfall wird beispielsweise entschieden, dass bei einem Umlauf des Satelliten ein gewünschtes Zielgebiet nicht oder nur kurzzeitig aufgenommen wird. Auf diese Weise stehen für alternative Zielgebiete Kapazitäten zur Verfügung und/oder wird Energie der Bordeinrichtungen gespart.

Auch unabhängig von der vorliegenden Erfindung ist die Detektion und Identifikation von Wolken in Fernerkundungsdaten eine wichtige Aufgabe, die aus unterschiedlichen Gründen zu lösen ist. Im Rahmen atmosphärenrelevanter Fragestellungen sind Wolken der eigentliche Gegenstand von Untersuchungen. Für die Fernerkundung von Boden und Wasser auf Planeten sind Wolken störende Elemente, da sie die Beobachtung des Untergrundes verhindern. Vor diesem Hintergrund ist die Wolkenbedeckung ein Qualitätskriterium für Fernerkundungsdaten. Dieses Kriterium dient dem Nutzer zur Orientierung in der Vielzahl verfügbarer Fernerkundungsdaten. Die Qualität der Wolkendetektion ist damit von elementarer Bedeutung für die Bestimmung der Anzahl nutzbarer Daten und letztlich für die Qualität der nachfolgenden Produkterstellung.
Insbesondere das "International Satellite Cloud Climatology Project" (ISCCP) (siehe die am Ende dieser Beschreibung aufgelisteten Literaturangaben: Rossow, 1989; Rossow et al., 1993) hat eine Reihe von Wolkendetektions-Schematas hervorgebracht, die die Strahlung in den sichtbaren und infraroten atmosphärischen Fenstern nutzten. Des Weiteren wurden Algorithmen entwickelt, die automatisch betrieben und in vollautomatische Verarbeitungsketten eingebunden werden können.

Die Sensoreinrichtung eines bestimmten Landerkundungssatelliten, LANDSAT 7 / ETM+, verfügt nur über einen Thermalkanal. Daher kann zur Identifikation von Wolken nicht die so genannte Split-Window-Technik genutzt werden. Dennoch wurden auch hierfür Wolkenidentifikationsalgorithmen wie NASA Automatic Cloud Cover Assessment für Landsat 7 /ETM+ (Irish, 2000) oder ACRES, Automatic Cloud Cover Assessment Algorithmus (Xu & Wu, 2003) zur automatischen Wolkenidentifikation entwickelt.

Derartige bekannte Verfahren der Wolkendetektion sowie die genannten Algorithmen und Verarbeitungsketten können bei der Bewertung von Fernerkundungsdaten gemäß der vorliegenden Erfindung angewendet bzw. eingesetzt werden und brauchen hier nicht näher erläutert zu werden.

Die zuvor genannten und zitierten Verfahren genügen jedoch nicht der Forderung der ESA, die (wegen möglicher Verdeckung eingeschränkte) Datennutzbarkeit automatisch durch ein quantitatives Maß zu bewerten. Ein solches Verfahren ist frei von subjektiv bedingten Fehlern eines Operators und garantiert somit die Wiederholbarkeit einer Bewertung. Die Erfinder haben in einer weiteren Erfindung, für die bereits eine deutsche Patentanmeldung mit dem amtlichen Aktenzeichen DE 10 2004 024595.9 eingereicht wurde, ein solches Verfahren beschrieben. Der Inhalt dieser Patentanmeldung wird hiermit vollinhaltlich in die vorliegende Patentanmeldung aufgenommen.

Gemäß dem Verfahren wird eine Bildmatrix verwendet, die einem aus den auszuwertenden Fernerkundungsdaten erzeugten Bild entspricht. Die Bildmatrix enthält Informationen darüber, welcher Bereich oder welche Bereiche des Bildes nicht oder nur eingeschränkt nutzbar sind. Aus diesen Informationen wird zumindest ein Maß dafür ermittelt, wie groß zumindest ein anderer, nutzbarer Bildbereich ist. Insbesondere wird die Größe des nutzbaren Bildbereichs durch eine oder mehrere räumlich eindimensionale Maße (z. B. Längen) charakterisiert. Die Größe des nutzbaren Bildbereichs ist eine zuverlässige Angabe über den Wert des gesamten Bildes bei der Auswertung der Daten. Weist das Bild beispielsweise einen einzigen großen zusammenhängenden wolkenfreien Bereich auf, bestehen für viele Anwendungen nur geringfügige Einschränkungen bei der Auswertung eines solchen Datensatzes gegenüber dem Fall eines vollständig nutzbaren Bildes. Weist das Bild dagegen bei gleicher Wolkenbedeckung viele kleine nutzbare Bildbereiche auf, die durch Bereiche mit Wolken voneinander getrennt sind, ist die Nutzbarkeit des Bildes in der Regel deutlich geringer. Durch diese Erfindung kann die Größe des nutzbaren Bildbereichs mit verhältnismäßig geringem rechnerischem Aufwand objektiv ermittelt werden, wie noch anhand von Ausgestaltungen der Erfindung deutlich wird.

Bisher werden Verfahren zur Wolkenidentifikation erst angewandt, nachdem die von einem Zielgebiet aufgenommenen Daten von einer Bodenstation empfangen wurden, um die Nutzer von Fernerkundungsdaten über die Qualität der Fernerkundungsdaten zu informieren. Die Wolkenidentifikation wird also lediglich in einer Nachbearbeitung der Daten eingesetzt. Das hat den Nachteil, dass die verschiedensten Systeme, die mit der Verarbeitung und Speicherung der Daten befasst sind, mit letztendlich nicht verwertbaren Daten belastet werden. Mit solch unverwertbaren Daten werden insbesondere die beschränkten Energiesysteme, Datenspeicherungssysteme und Übertragungssysteme eines Satelliten belastet.

Bisher gab es keine Strategie in der Fernerkundung, vorab (vor der eigentlichen Messung) die Nutzbarkeit von Fernerkundungsdaten zu ermitteln und abhängig davon die Gewinnung von Fernerkundungsdaten zu steuern.

Durch die Erfindung stehen nun ein System und ein Verfahren zur Verfügung, bei denen eine Identifikation von Wolken und eine Bewertung der Datennutzbarkeit zur Gewinnung von Fernerkundungsdaten genutzt werden. Dadurch kann die Gewinnung verwertbarer Daten optimiert werden. Insbesondere werden die Hilfsdaten (in der folgenden Terminologie die "ersten Fernerkundungsdaten") unmittelbar vor der eigentlichen Messung aufgezeichnet. "Unmittelbar" bedeutet in diesem Fall, dass die Wolkenbedeckung oder andere Verdeckung bei der Aufnahme der zweiten Fernerkundungsdaten zumindest annähernd noch in derselben Weise besteht oder ausreichend genau durch ein Modell der Wolkenentwicklung und/oder Wolkenbewegung auf den Zeitpunkt oder Zeitraum der Aufnahme extrapoliert werden kann. Ferner haben die ersten Fernerkundungsdaten vorzugsweise eine geeignete örtliche Auflösung, um für ein z. B. 30 km breites Zielgebiet relativ sichere Aussagen zur Wolkensituation zu erlauben.

Die Gewinnung der ersten Fernerkundungsdaten liegt vorzugsweise so kurz vor der Aufnahme der zweiten Fernerkundungsdaten, dass nicht mehr Zeit dazwischen liegt, als für die Auswertung der ersten Fernerkundungsdaten und die Steuerungder Gewinnung der zweiten Fernerkundungsdaten benötigt wird. Je kürzer diese Zeitspanne gewählt wird, desto geringer sind die Fehlereinflüsse durch z. B. Wolkenbewegungen. Diese Zeitspanne sollte bei Tandemmissionen (s.u.) zwei Stunden nicht überschreiten und möglichst deutlich kürzer sein, z. B. kürzer als eine Stunde.

Im Folgenden wird der Einfachheit halber lediglich von Wolkenbedeckung gesprochen, obwohl z. B. auch andere zwischen Zielobjekt und Sensoreinrichtung gelegene Einflüsse (z. B. Aerosole) eine Verdeckung bewirken können. Weitere Gründe für eine Verdeckung z. B. Bodennebel, Sandstürme und andere bodennahe Erscheinungen, bei denen ebenfalls die Sicht auf den Untergrund behindert ist.

Die Voraberkennung der Wolkengebiete vor der Gewinnung der zweiten Fernerkundungsdaten zur Steuerung der Gewinnung von nutzbaren Daten kann z. B. durch die folgenden verschiedenen Lösungsansätze realisiert werden, die insbesondere alle auf einer schnellen Datennutzbarkeitsanalyse aufbauen. Dabei sind Kombinationen der verschiedenen Lösungsansätze miteinander möglich. Insbesondere kann die erste Sensoreinrichtung eine auf mehrere Satelliten verteilte Sensoreinrichtung sein, d. h. es werden die von mehreren Satelliten aufgenommenen ersten Fernerkundungsdaten ausgewertet:
- Das Zielgebiet wird unmittelbar vorher von einem ersten Objekt überflogen, das die erste Sensoreinrichtung aufweist. "Überfliegen" schließt dabei alle Fälle einer Relativbewegung zwischen dem Zielgebiet und dem Objekt ein, bei der das Zielgebiet von der Sensoreinrichtung aufgenommen werden kann. Insbesondere muss das Zielgebiet nicht in der Nadir-Blickrichtung erscheinen. Die zweiten Fernerkundungsdaten werden dann von der zweiten Sensoreinrichtung aufgenommen, die Teil eines zweiten Objekts ist. Bei dem ersten und dem zweiten Objekt handelt es sich insbesondere um Satelliten. Da in der Regel die Bahnen der beiden Satelliten nicht identisch sind, sollte der erste Satellit eine möglichst große Schwadbreite seiner Sensoreinrichtung aufweisen. Die in der Regel entsprechend geringere geometrische Auflösung der ersten Sensoreinrichtung reicht für eine Bewertung der Nutzbarkeit aus.
- Das zweite Objekt (das insbesondere als "Hauptsatellit" bezeichnet werden kann) verfolgt das erste Objekt dauerhaft. Es fliegt genau auf der Spur des vorhergehenden Satelliten oder zumindest in geringem Abstand entlang dessen Spur. Das erste Objekt hat eine Sensoreinrichtung mit mindestens einer Schwadbreite in Größe der potentiellen Schwadbreite des nachfolgenden Objekts (Hauptsatelliten). Unter der potentiellen Schwadbreite der zweiten Sensoreinrichtung bzw. des zugehörigen Objekts wird die Schwadbreite verstanden, in dem die zweite Sensoreinrichtung, die mit Hilfe einer Schwenkvorrichtung schwenkbar ist, Daten aufzeichnen kann. Dabei muss die zweite Sensoreinrichtung nicht die gesamte Schwadbreite während einer einzigen Aufzeichnung ausfüllen. Zum Beispiel können die Grenzen der Schwadbreite lediglich durch Verschwenken der zweiten Sensoreinrichtung erreicht werden. In dem Fall, dass die Objekte voneinander unabhängige Missionen erfüllen (passive Tandemmission), sollte die erste Sensoreinrichtung wieder eine möglichst große Schwadbreite aufweisen. Ist dagegen der erste Satellit speziell zum Zwecke der Steuerung des zweiten Satelliten ausgelegt (aktive Tandemmission), dann braucht die Schwadbreite der ersten Sensoreinrichtung lediglich so groß sein wie die potentielle Schwadbreite der zweiten Sensoreinrichtung. Außerdem können Steuersignale zur Steuerung der Gewinnung der zweiten Fernerkundungsdaten und/oder Informationen, aus denen sich die Steuersignale gewinnen lassen, direkt von dem ersten Objekt zu dem zweiten Objekt übertragen werden. Des Weiteren kann in dem ersten Objekt selbst eine (z. B. gering auflösende, auf die Wolkenidentifikation abgestimmte) Aufzeichnungseinrichtung angeordnet sein. Messungen der ersten Sensoreinrichtung können dann unmittelbar in dem ersten Objekt ausgewertet werden und die Auswertungsergebnisse zur Steuerung der Gewinnung der zweiten Fernerkundungsdaten verwendet werden. Insbesondere kann so die Aufnahme der zweiten (z. B. hyperspektralen) Sensoreinrichtung und/oder die Speicherung der aufgenommenen Daten gesteuert werden.
- Die erste Sensoreinrichtung und die zweite Sensoreinrichtung können in demselben Flugobjekt installiert sein. Dabei ist die erste Sensoreinrichtung derart ausgerichtet, dass sie in Flugrichtung weiter vorne gelegene Beobachtungsgebiete erfasst als die zweite Sensoreinrichtung. Insbesondere kann zwischen den Beobachtungsgebieten der ersten und der zweiten Sensoreinrichtung ein Abstand liegen, der auf die für die Auswertung der ersten Fernerkundungsdaten und die Erzeugung der Steuersignale benötigte Zeit abgestimmt ist. In diesem Fall kann die Schwadbreite der ersten Sensoreinrichtung so groß sein wie die potentielle Schwadbreite der zweiten Sensoreinrichtung.
- Für eine automatische Auswertung der Wolkenbedeckung und eine darauf aufbauende Datennutzbarkeitsbewertung (z. B. einschließlich einer Strukturanalyse der Verdeckung, einer Satellitenprojektionswandlung und einer Kartierung der Daten, sowie einer Unterscheidung von wasser- und landbedeckten Oberflächen als mögliche Zielgröße) kann das in der oben genannten Patentanmeldung DE 10 2004 024595.9 beschriebene Verfahren ausgeführt werden.
- Vorzugsweise ist eine Steuereinrichtung vorhanden, die ein Schwenken der zweiten Sensoreinrichtung entsprechend einer durchgeführten Optimierung zur Gewinnung der zweiten Fernerkundungsdaten ermöglicht. Alternativ oder zusätzlich kann die Steuereinrichtung eine Aufnahme der zweiten Fernerkundungsdaten durch die zweite Sensoreinrichtung ein- und ausschalten und/oder wolkenkontaminierte, nicht nutzbare Bildbereiche markieren (z. B. durch einen entsprechenden Kode kennzeichnen), um die weitere Gewinnung der zweiten Fernerkundungsdaten zu beeinflussen. Beispielsweise können entsprechend markierte Bildbereiche von der satelliten-internen Datenverarbeitung, insbesondere der Abspeicherung der Daten oder einer Vorverarbeitung, ausgeschlossen werden.
- Die Vorausschau (durch Aufnahme der ersten Fernerkundungsdaten) sollte vorzugsweise so erfolgen, dass ein optimaler Aufzeichnungsstreifen (bzw. Teilstreifen) aus einem potentiellen Zielgebiet rechtzeitig identifiziert werden kann, um z. B. eine schwenkbare zweite Sensoreinrichtung auf ein Zielgebiet mit realer Schwadbreite auszurichten. Unabhängig von einer möglicherweise vorliegenden Prioritätenliste (z. B. mit einer nach Wichtigkeit geordneten Reihenfolge) zur Auswahl von Zielgebieten kann mittels eines Optimierungsalgorithmus das sicherste von Wolken freie Zielgebiet (sofern vorhanden) identifiziert werden. Anschließend kann das oder die identifizierten Gebiete mit der Prioritätenliste verglichen werden. Gegebenenfalls kann dann z. B. entschieden werden, dennoch ein Zielgebiet mit teilweiser Wolkenverdeckung für die Aufnahme der zweiten Fernerkundungsdaten auszuwählen. Demzufolge ist es sinnvoll, aus einem potentiellen Zielgebiet gleichzeitig mehrere Teil-Zielgebiete auszuwählen, auf die beim Überflug ausgewichen werden kann.
- Ist gegebenenfalls (z. B. aus Gründen wie begrenzter Datenspeicherkapazität oder Daten-Übertragungskapazität) nur die Aufnahme über eine begrenzte Passlänge und/oder begrenzten Aufnahmezeitraum hinweg möglich, dann ermöglicht die schnelle Wolkenerkennung eine schnelle Datenreduktion (die auch ein Abschalten des Sensors auslösen kann) unter Umständen die Verlängerung der Aufnahme über das ursprüngliche Zielgebiet hinaus und damit eine Erhöhung der Datenausbeute.

In der Praxis kommt es häufig vor, dass ein potentielles Zielgebiet täglich von verschiedenen Fernerkundungssatelliten überflogen wird, wobei sich die Anzahl der Satelliten, die geeignete erste Fernerkundungsdaten liefern können, durch die Anforderung, dass die Daten-Nutzbarkeitsvorhersage aktuell sein soll, und durch die Notwendigkeit einer Überdeckung des von den ersten Fernerkundungsdaten erfassten Gebiets und des Zielgebiets erheblich reduzieren kann. Durch Schnelligkeit bei der Abarbeitung der Verfahrensschritte zur Auswertung der ersten Fernerkundungsdaten kann jedoch erreicht werden, dass geeignete Informationen in kurzer Zeit nach der Aufzeichnung und gegebenenfalls nach dem Datenempfang (durch eine Bodenstation oder durch das Flugobjekt mit der zweiten Sensoreinrichtung) bereitgestellt werden können.

Die Auswertung der ersten Fernerkundungsdaten und vorzugsweise eine Datennutzbarkeitsbewertung kann (unter Umständen abhängig davon, welches Verfahren angewendet wird) an verschiedenen Orten (z. B. im ersten und/oder zweiten Flugobjekt und/oder in einer Bodenstation) ausgeführt werden. Ziel der Nutzbarkeitsbewertung ist insbesondere eine Bereitstellung von Informationen zur Optimierung der Datengewinnung der zweiten Fernerkundungsdaten.

Das Ergebnis der Auswertung der ersten Fernerkundungsdaten kann an verschiedenen Orten in Steuerbefehle zur Steuerung der Gewinnung der zweiten Fernerkundungsdaten umgesetzt werden. Abhängig davon werden die Steuerbefehle z. B. von Flugobjekt zu Flugobjekt, von einer Bodenstation zu einem Flugobjekt oder nur innerhalb eines Flugobjekts zu einer Steuereinrichtung übertragen.
Es kann optional eine Datennutzbarkeitsbewertung der zweiten Fernerkundungsdaten durchgeführt werden, um frühzeitig aus den gewonnenen Daten unbrauchbare Daten zu selektieren. Auch bei dieser Datennutzbarkeitsbewertung wird eine Wolkendetektion durchgeführt. Damit können die Menge der zur Bodenstation zu übertragenden nicht nutzbaren Daten und der Speicher- und weitere Verarbeitungsbedarf reduziert werden. Eine derartige Qualitätskontrolle der Bedingungen bei der Aufnahme der zweiten Fernerkundungsdaten kann auf Grundlage physikalischer und mathematischer Algorithmen erfolgen.

Die Erfindung beinhaltet auch eine Anordnung zum Gewinnen von Fernerkundungsdaten, insbesondere durch einen Satelliten, wobei die Anordnung Folgendes aufweist:
a) eine erste Sensoreinrichtung, die ausgestaltet ist, erste Fernerkundungsdaten zu erzeugen,
b) eine schwenkbare zweite Sensoreinrichtung, die ausgestaltet ist, zweite Fernerkundungsdaten zu erzeugen,
c) einer Auswertungseinrichtung, die ausgestaltet ist, durch Auswertung der ersten Fernerkundungsdaten zu ermitteln, ob und/oder bis zu welchem Grad Daten eines Zielgebiets und optional möglicher Ausweichziele, von dem bzw. denen durch die zweite Sensoreinrichtung die zweiten Fernerkundungsdaten aufgenommen werden sollen, nutzbar sind (z. B. das Zielgebiet durch Wolken verdeckt ist), und
d) eine Steuereinrichtung, die ausgestaltet ist, ein Aufnahmegebiet, von dem die zweiten Fernerkundungsdaten aufgenommen werden, durch Steuern einer Schwenkstellung der zweiten Sensoreinrichtung einzustellen.

Die Anordnung kann ein erstes Objekt aufweisen, das ausgestaltet ist, das Zielgebiet zur Gewinnung der ersten Fernerkundungsdaten zu überfliegen, wobei das erste Objekt die erste Sensoreinrichtung aufweist. Ferner kann die Anordnung ein zweites Objekt aufweisen, das ausgestaltet ist, das Zielgebiet zur Gewinnung der zweiten Fernerkundungsdaten zu überfliegen, wobei das zweite Objekt die zweite Sensoreinrichtung aufweist. Das erste Objekt und das zweite Objekt sind derart relativ zueinander angeordnet, dass das Zielgebiet zuerst von dem ersten Objekt und danach von einem zweiten Objekt überflogen wird.

Ferner kann das erste Objekt die Auswertungseinrichtung zur Auswertung der ersten Fernerkundungsdaten aufweisen, wobei das erste Objekt die Steuereinrichtung zur Steuerung der Gewinnung der zweiten Fernerkundungsdaten aufweist und wobei das erste Objekt und das zweite Objekt eine Übertragungseinrichtung zur Übertragung von Steuersignalen der Steuereinrichtung zu dem zweiten Objekt aufweisen. Die Steuereinrichtung kann alternativ in dem zweiten Objekt angeordnet sein oder verteilt in dem ersten und dem zweiten Objekt angeordnet sein.

Außerdem können zumindest ein Teil der ersten Sensoreinrichtung und die zweite Sensoreinrichtung in und/oder an demselben Flugobjekt installiert sein.

Ausführungsbeispiele und weitere Details der Erfindung werden nun unter Bezugnahme auf die beigefügte Zeichnung beschrieben. Dabei ist die Erfindung nicht auf die Ausführungsbeispiele und Details beschränkt. Im Folgenden beschriebene Merkmale der Erfindung können jedoch einzeln oder zu mehreren mit den zuvor beschriebenen Ausgestaltungen der Erfindung kombiniert werden. Die einzelnen Figuren der Zeichnung zeigen:
- Fig. 1: eine Karte der Erdoberfläche, die im Kartenzentrum den europäischen Kontinent zeigt, wobei in der Karte Gebiete markiert sind, die beim Überflug von zwei Satelliten mit Sensoren unterschiedlicher Schwadbreite nacheinander durch Fernerkundung erfasst werden können, und wobei der Satellit zeitlich vorab fliegt, dessen Sensor die größere Schwadbreite besitzt,
- Fig. 2: die Karte gemäß Fig. 1, wobei jedoch der zweite nachfolgende Satellit genau oder nahe der Spur des voraus fliegenden ersten Satelliten, an und/oder in dem sich der Sensor größerer Schwadbreite befindet, fliegt und damit eine Überlappung des Zielgebietes durch beide Satelliten immer gewährleistet ist,
- Fig. 3: eine schematische Darstellung eines ersten Verfahrens zur Gewinnung von Fernerkundungsdaten,
- Fig. 4: eine schematische Darstellung eines zweiten Verfahrens zur Gewinnung von Fernerkundungsdaten für eine nicht gekoppelte Tandemmission von zwei Satelliten,
- Fig. 5: eine schematische Darstellung eines dritten Verfahrens zur Gewinnung von Fernerkundungsdaten für eine gekoppelte Tandemmission von zwei Satelliten, wobei der erste Satellit die Gewinnung der zweiten Fernerkundungsdaten durch den zweiten Satelliten steuert,
- Fig. 6: eine schematische Darstellung eines vierten Verfahrens zur Gewinnung von Fernerkundungsdaten für eine Mission mit nur einem Satelliten, der sowohl die ersten als auch die zweiten Fernerkundungsdaten aufnimmt.

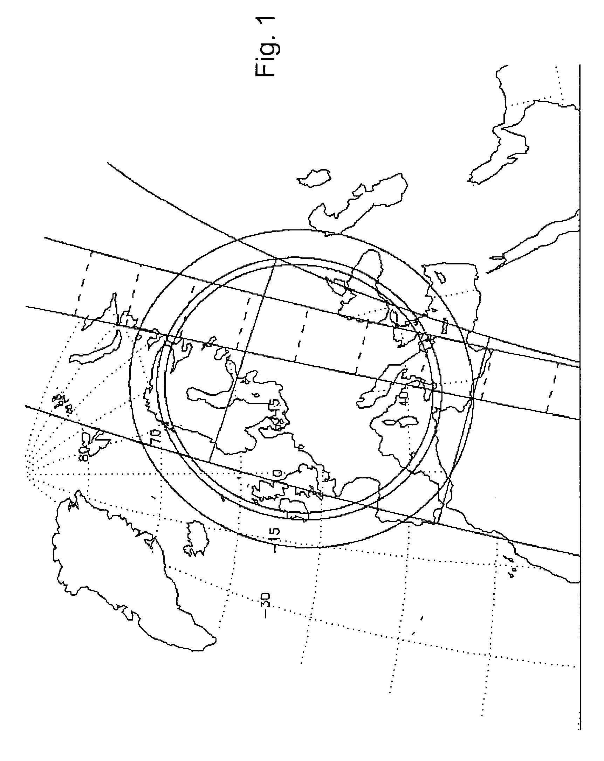

Die in Fig. 1 gezeigten Gebiete werden von zwei unabhängigen Sensoren unterschiedlicher Schwadbreite aufgenommen, wobei sich die Bahnen der jeweiligen Satelliten im Bereich eines Zielgebietes schneiden. Der jeweilige Schwad (die zwei streifenförmigen Gebiete) ist projektionsbedingt an seinem Außenrand in Fig. 1 durch jeweils leicht gekrümmte Linien begrenzt, wobei sich die insgesamt vier Linien jeweils etwa von rechts oben bis nach unten in der Mitte der Figur, entsprechend der Flugrichtung, erstrecken. Die jeweils rechts und links außen gelegenen Linien (die teilweise durch Querlinien miteinander verbunden sind) begrenzen den Schwad eines Sensors auf einem ersten Satelliten (erster breiter Schwad). Die beiden inneren, näher beieinander liegenden Linien (die durch gestrichelte Querlinien miteinander verbunden sind) begrenzen den Schwad eines Sensors auf einem zweiten Satelliten (zweiter Schwad). Dieser zweite Schwad wird als potentieller Schwad bezeichnet, da die eigentliche Schwadbreite dieses Sensors deutlich geringer ist, aber seine Grenzen durch ein Schwenken des Sensors erreicht werden können.

Es ist erkennbar, dass zumindest in dem in Fig. 1 gezeigten Kartengebiet der zweite Schwad vollständig innerhalb des ersten Schwads verläuft. Allerdings verlaufen die Schwade nicht parallel zueinander, da sich die entsprechenden Umlaufbahnen der zugehörigen Satelliten kreuzen.

Fig. 1 zeigt ein denkbares Szenario mit einem ersten Satelliten (z. B. einem NOAA, National Oceanics and Atmospheric Administration) Satelliten mit einer Schwadbreite einer Sensoreinrichtung (z. B. einem AVHRR, Advanced VeryHigh Resolution Radiometer) von 3000 km. Die potentielle Schwadbreite einer zweiten Sensoreinrichtung des zweiten Satelliten, der das durch Kreislinien in Fig. 1 umrandete Gebiet später überfliegt, beträgt etwa 800 km. Die zweite Sensoreinrichtung kann jedoch nicht über die gesamte Schwadbreite gleichzeitig Fernerkundungsdaten aufnehmen. Die tatsächliche Schwadbreite beträgt lediglich 30 km. Daher ist die zweite Sensoreinrichtung quer zur Flugrichtung schwenkbar ausgestaltet. Bei maximaler Verschwenkung erreicht das tatsächlich aufgenommene Gebiet den Rand der potentiellen Schwadbreite.

Da sich in dem in Fig. 1 dargestellten Fall die abtastbaren Gebiete der beiden Satelliten nicht ständig überdecken, wird vorzugsweise auf mehr als einen Satelliten zur Aufnahme der ersten Fernerkundungsdaten zurückgegriffen, die (zeitlich nacheinander und/oder gleichzeitig) jeweils einen Teil der ersten Fernerkundungsdaten liefern. Werden bei der Auswertung der so genannten ersten Fernerkundungsdaten keine geeigneten Wolkentransportmodelle verwendet, dann sollte der zeitliche Abstand zwischen dem Überflug des ersten Satelliten und des zweiten Satelliten nicht größer sein als der Zeitraum, der zur Auswertung der ersten Fernerkundungsdaten und zur Erzeugung der Steuersignale zur Gewinnung der zweiten Fernerkundungsdaten benötigt wird.

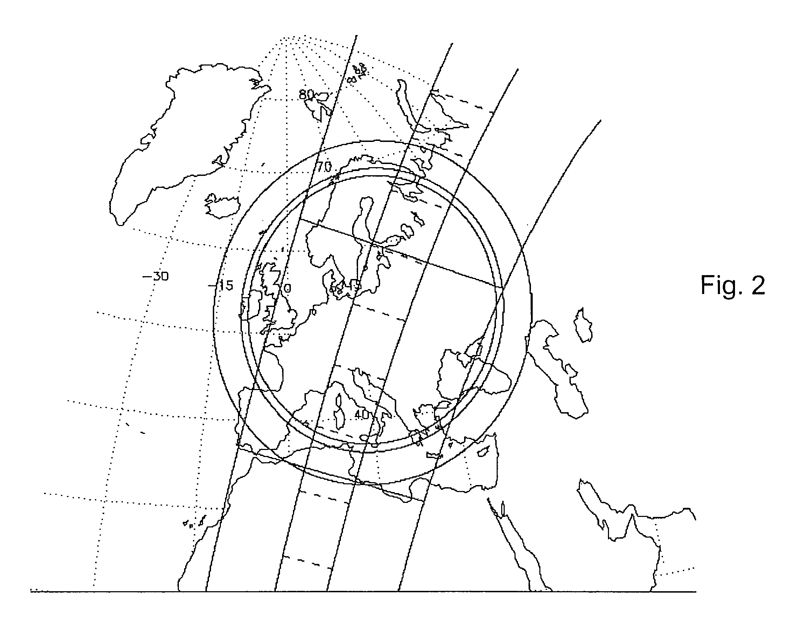

In einer zweiten Lösung kann das Problem der zeitlich geeigneten Überdeckung des Zielgebietes durch eine Tandemmission gelöst werden. Diese Tandemmission weist einen vorab fliegenden Satelliten (Satellit 1) auf, dessen Sensoreinrichtung die ersten Fernerkundungsdaten liefern kann. Dem entspricht der parallele Verlauf der Flugbahn gemäß Fig. 2, wobei der potentielle Schwad für die Aufnahme der zweiten Fernerkundungsdaten dauerhaft innerhalb des Schwads für die Aufnahme der ersten Fernerkundungsdaten verläuft.

Wird der Satellit 1 speziell zur Realisierung der Aufgaben von Satellit 2 in den Orbit des Planeten gebracht (gekoppelte Tandemmission), dann können sogar durch direkte Kommunikation beider Satelliten untereinander (ohne Einbeziehung einer Bodenstation) die erforderlichen Schritte zur Auswertung der ersten Fernerkundungsdaten und zur Erzeugung der Steuersignale realisiert werden. Voraussetzung für die Tandemmission ist der Flug beider Satelliten auf nahe beieinander gelegenen parallel verlaufenden Bahnen, die lediglich etwas zueinander versetzt sind, um die Rotation des Planeten zu kompensieren.

Eine dritte Lösung modifiziert die vorhergehende Tandemlösung in der Weise, dass die eigentliche Mission (Gewinnung der zweiten Fernerkundungsdaten) mit ihren Bahnparametern an eine vorhandene Mission (nicht gekoppelte Tandemmission) angepasst wird. Da es ein umfangreiches Spektrum von Fernerkundungssatelliten mit sonnensynchroner Bahn gibt, die überwiegend sehr ähnliche Bahnparameter (einschließlich ähnlicher Äquatordurchgangszeit) besitzen und es auch künftig geben wird, ist es möglich, aus den vorhandenen Satelliten eine geeignete Auswahl zu treffen, und den nachfolgenden, zweiten Satelliten hinsichtlich seiner Bahn anzupassen. Das hat zusätzlich den Vorteil, dass alle der Gewinnung der zweiten Fernerkundungsdaten vorausgehenden Schritte lediglich auf einen einzigen vorab fliegenden Satelliten abgestimmt werden müssen. Der Nachteil besteht darin, dass die Kommunikation zwischen den Satelliten über eine Bodenstation erfolgt, falls der erste Satellit von einem anderen Betreiber betrieben wird.

In einer vierten Lösung werden die erste Sensoreinrichtung und die zweite Sensoreinrichtung auf bzw. an dem gleichen Satelliten angeordnet. Mit der zweiten Sensoreinrichtung können Fernerkundungsdaten beispielsweise mit hoher räumlicher und/oder spektraler Auflösung aufgenommen werden. Die erste Sensoreinrichtung weist eine geringere räumliche und/oder spektrale Auflösung auf. Sie ist derart auf dem Satelliten angeordnet, dass sie das potentielle Zielgebiet in Flugrichtung voraus erfassen kann.

Durch diese Lösung können für die Vorbereitung der Gewinnung der zweiten Fernerkundungsdaten erforderlichen Schritte an Bord eines einzigen Satelliten ausgeführt werden. Diese Lösung hat den Vorteil, dass die Sondierung nur für das potentielle Zielgebiet ausgeführt werden muss. Der Nachteil besteht jedoch in der Entwicklung und Steuerung des zusätzlichen Sensors, einschließlich eines dadurch bedingten erhöhten Energiebedarfs an Bord des Satelliten. Weiterhin ist die Vorausschau kürzer als bei einem vorab fliegenden Satelliten, so dass andere Kriterien zur Optimierung der Messung zur Anwendung kommen.

In einer fünften Lösung wird die vorhergehende Lösung vier derart modifiziert, dass bei einem fest eingestellten Zielgebiet dieses mit der ersten Sensoreinrichtung vorab sondiert wird, um den Einsatz der zweiten Sensoreinrichtung zu steuern. Diese Lösung hängt davon ab, wie das Verhältnis von Einsatz zusätzlicher Energie durch eine zusätzliche Sensoreinrichtung, mögliche Einsparung durch Nichteinsatz der zweiten Sensoreinrichtung und mögliche Datenreduktion ist.

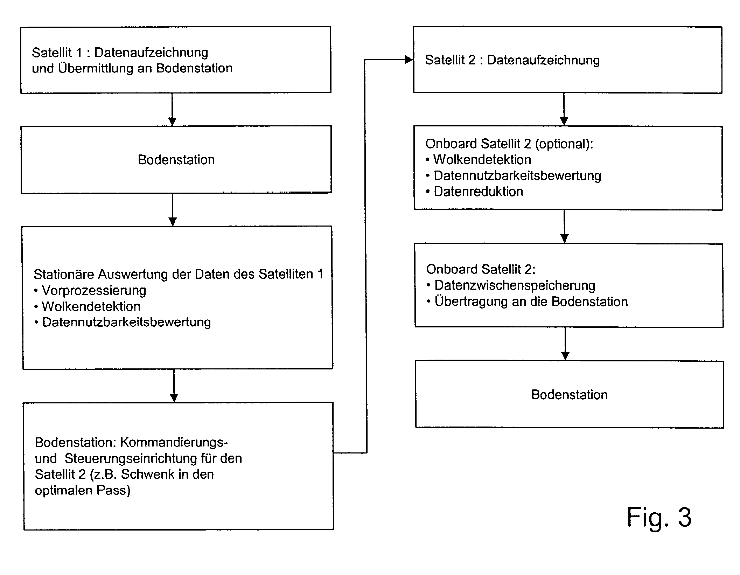

Der in Fig. 3 dargestellte Ablauf betrifft einen Mission mit zwei Satelliten, wobei Satellit 1 mit der ersten Sensoreinrichtung (kurz: Sensor 1) zur der Detektion von Wolken und zur Datennutzbarkeitsbewertung ausgelegt ist. Sensor 2 an Satellit 2 ist beispielsweise eine hyperspektrale Sensoreinrichtung.

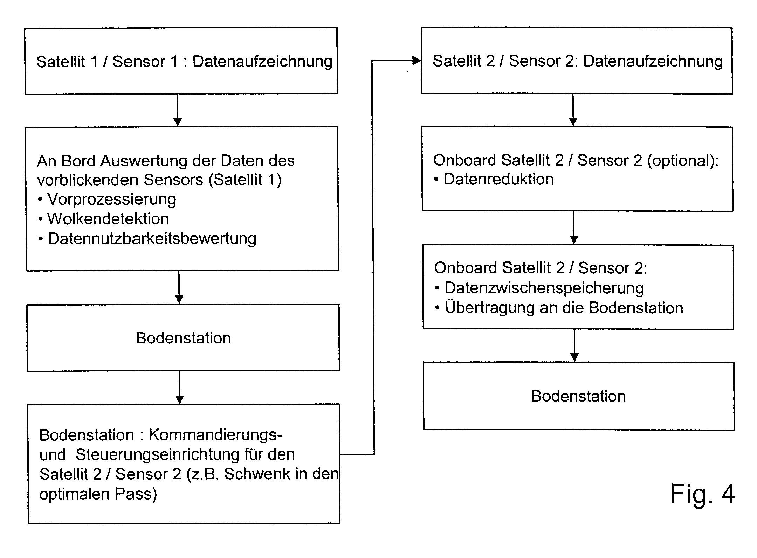

Links oben in der Figur ist der erste Schritt dargestellt. Die weiteren Schritte folgen in Pfeilrichtung zunächst nach unten und anschließend von oben nach unten auf der rechten Seite der Figur. Entsprechendes gilt für Figuren 4 bis 6.

Bei dem in Fig. 3 dargestellten Ablauf werden in dem ersten Schritt die ersten Fernerkundungsdaten von Satellit 1 aufgenommen und zu einer Bodenstation. übertragen. Der Empfang durch die Bodenstation ist in dem folgenden Schritt 2 durch den Begriff "Bodenstation" symbolisiert.

In Schritt 3 werden von der Bodenstation die ersten Fernerkundungsdaten hinsichtlich einer Detektion von Wolken (womit auch andere Verdeckungen gemeint sein können) ausgewertet. Dabei können die ersten Fernerkundungsdaten zunächst in an sich bekannter Weise vorprozessiert werden, um die eigentliche Wolkendetektion durchzuführen. Nach und/oder gleichzeitig mit der eigentlichen Detektion kann eine Bewertung der Nutzbarkeit der Daten durchgeführt werden, wobei beispielsweise einzelne Pixel, Bildbereiche oder vollständige Gebiete der ersten Fernerkundungsdaten bewertet werden. Z. B. kann das Bewertungsergebnis ein Element auf einer Bewertungsskala (von beispielsweise "unbrauchbar" über "teilweise kontaminiert" bis "wolkenfrei") sein.

In Schritt 4 wird das Ergebnis der Auswertung dazu verwendet, die Gewinnung der zweiten Fernerkundungsdaten zu planen und/oder entsprechende Steuersignale zu generieren. Das Planungsergebnis und/oder die Steuersignale werden zu Satellit 2 übertragen.

In Schritt 5 (rechte Seite der Figur oben) werden die zweiten Fernerkundungsdaten in Satellit 2 entsprechend der Planung und/oder Steuerung der Bodenstation aufgenommen.

In Schritt 6, der optional durchgeführt wird, werden die aufgenommenen Daten ebenfalls einer Wolkendetektion unterzogen, wobei (z. B. in entsprechender Weise wie bei den ersten Fernerkundungsdaten) die Nutzbarkeit bewertet werden kann. Dieser Schritt führt i. d. R. zu einer Datenreduktion, in dem unbrauchbare Daten ausgesondert werden.

Die am Ende von Schritt 5 (oder, wenn ausgeführt, von Schritt 6) vorliegenden Daten werden in Schritt 7 in dem Satellit 2 abgespeichert und bei Funkkontakt mit der Bodenstation zur Bodenstation übertragen. Dort werden sie in Schritt 8 empfangen.

Die Bahnparameter des Satelliten mit dem betreffenden Sensor 2 mittlerer bis hoher räumlicher Auflösung und relativ geringer Schwadbreite werden an einen Satelliten mit einem geeigneten Sensor so angepasst, dass dieser wie in Fig. 2 ständig in einem definierten Abstand hinterher fliegt. Da es sich bei den Satelliten um unabhängige Missionen handeln kann, werden die Daten des voraus fliegenden Satelliten an der Bodenstation unmittelbar nach dem Empfang ausgewertet und der Datennutzbarkeitsanalyse unterworfen. Die Umsetzung in Steuerbefehle erfolgt anschließend an der Empfangsstation oder am Operationszentrum des Satelliten. Diese verschiedenen Fälle sind von dem Begriff "Bodenstation" umfasst.

Hierzu ist es erforderlich, dass der Satellit 2 vor Beginn der in den Empfangsbereich der Boden-Empfangstation Steuerung einfliegt. Daher sind in anderen Fällen die weiteren bereits kurz beschriebenen Lösungen anzuwenden. Solche Lösungen werden auch dann bevorzugt, wenn mit einer Empfangstation (z. B. in Neustrelitz) ein Gebiet von der Größe Europas abgedeckt werden kann.

Die Fig. 4 beschreibt ein zweites Verfahren, das gegenüber dem Verfahren gemäß Fig. 3 lediglich in den ersten drei Schritten abweicht. Das Verfahren ist insbesondere bei getrennt agierenden Satelliten einer Tandemmission anwendbar.

Im Schritt 1 werden wiederum die ersten Fernerkundungsdaten durch Satellit 1 aufgezeichnet. Sie werden jedoch noch nicht zu der Bodenstation übertragen. In Schritt 2 findet an Bord des Satelliten 1 die Auswertung der ersten Fernerkundungsdaten statt, die gemäß Fig. 3 in dem dortigen Schritt 3 in der Bodenstation stattfand. Am Ende von Schritt 2 und in Schritt 3 von Fig. 4 werden die Auswertungsergebnisse der zweiten Fernerkundungsdaten von Satellit 1 zur Bodenstation übertragen. Ab Schritt 4 wird das Verfahren wie in Fig. 3 fortgesetzt.

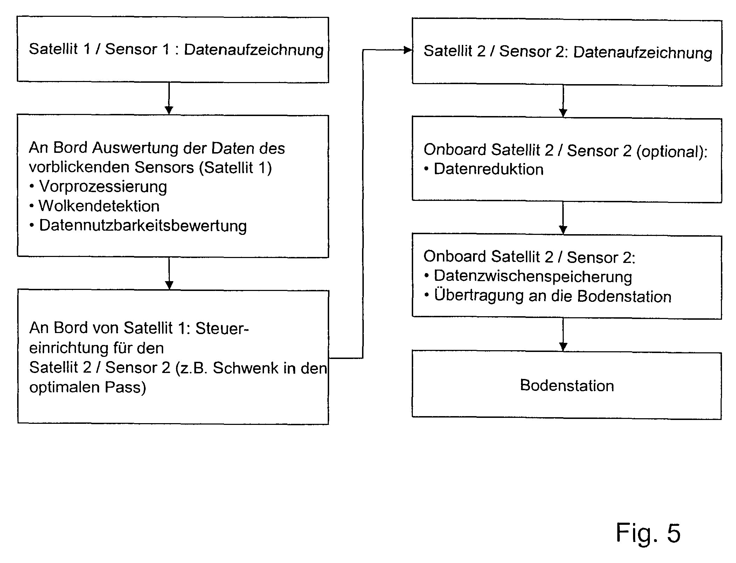

Das in Fig. 5 schematisch dargestellte Verfahren unterscheidet sich gegenüber den in Fig. 3 und Fig. 4 dargestellten Verfahren dadurch, dass von Satellit 1 keine Signale oder Daten zur Bodenstation übertragen werden müssen. Die ersten beiden Schritte laufen wie in dem Verfahren gemäß Fig. 4 ab. In Schritt 3 wird jedoch an Bord von Satellit 1 (alternativ kann dieser Schritt auch bereits in Satellit 2 durchgeführt werden, wenn vorher die ersten Fernerkundungsdaten zu Satellit 2 übertragen wurden) die Planung der Gewinnung der zweiten Fernerkundungsdaten durch Satellit 2 durchgeführt und/oder werden die entsprechenden Steuersignale generiert. Insbesondere weist Satellit 1 hierzu eine entsprechend ausgestaltete Steuereinrichtung auf.

Am Ende von Schritt 3 werden die entsprechenden Planungsergebnisse und/oder Steuersignale zu Satellit 2 übertragen. Die Übertragung kann auch laufend oder wiederholt während der folgenden Aufzeichnung und/oder Weiterverarbeitung der zweiten Fernerkundungsdaten stattfinden.

In Schritt 4 werden die zweiten Fernerkundungsdaten durch Sensor 2 an Satellit 2 aufgezeichnet. Die weiteren Schritte 5 bis 7 entsprechen den Schritten 6 bis 8 aus Fig. 3 und Fig. 4.

Der Verarbeitungsprozess ist insbesondere bei einer gekoppelten Tandemmission (d.h. Satellit 1 / Sensor 1 ist zur Erfassung der Wolken und zur Datennutzbarkeitsbewertung ausgelegt, Satellit 2 / Sensor 1 ist der hoch auflösende Sensor zur eigentlichen Datenerhebung) anwendbar. Die Kommandierung und Steuerung des Satelliten 2 / Sensor 1 erfolgt durch den Satelliten 1.

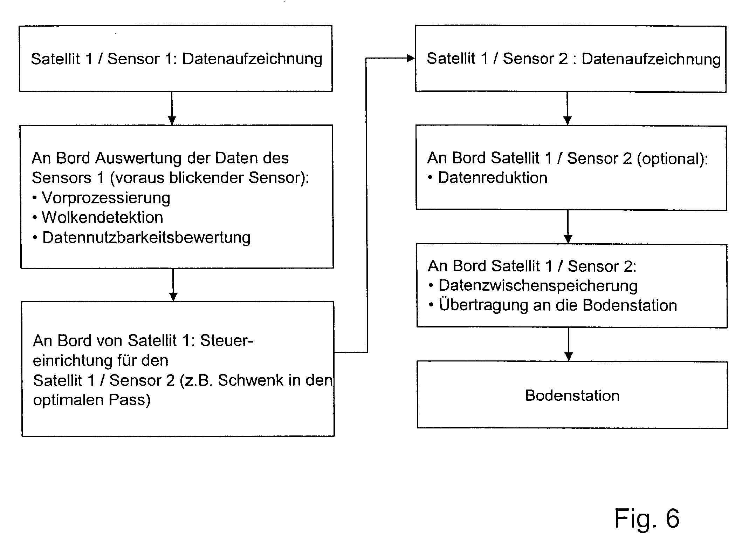

In Fig. 6 betrifft den Fall mit getrennt agierende Sensoreinrichtungen (Sensor 1 und Sensor 2) an Bord desselben Satelliten (z. B. Satellit 1 / Sensor 1 ist zur Erfassung der Wolken und zur Datennutzbarkeitsbewertung ausgelegt, Satellit 1 / Sensor 2 ist der hoch auflösende zur eigentlichen Datenerhebung). Die Steuerung des Sensors 2 erfolgt direkt an Bord des Satelliten.

Dementsprechend gibt es folgende Unterschiede zu dem Verfahren gemäß Fig. 5: eine Übertragung der Planungsergebnisse und Steuersignale von einem Satelliten zu einem anderen entfällt. Die Übertragung kann jedoch (je nach Ausgestaltung der Auswertungs- und Steuereinrichtungen in dem Satelliten) innerhalb des Satelliten stattfinden. Abgesehen von diesem Unterschied werden alle Schritte wie anhand von Fig. 5 beschrieben ausgeführt.

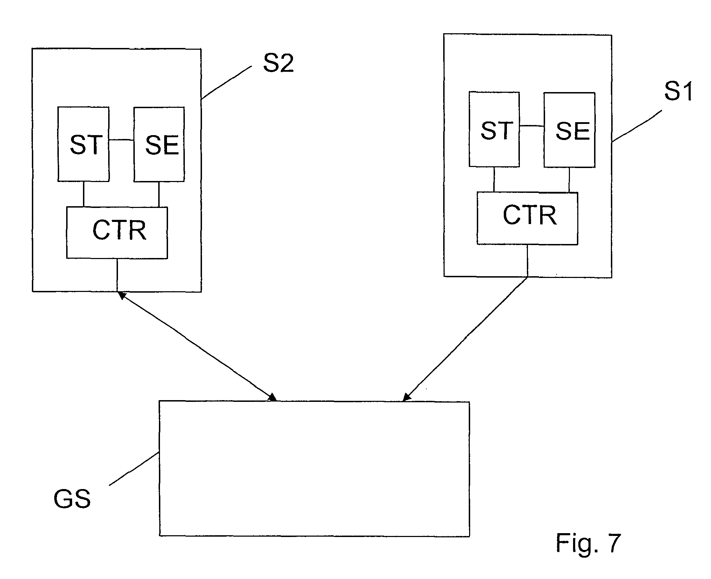

Fig. 7 zeigt schematisch ein erstes Flugobjekt S1 und ein zweites Flugobjekt S2, wobei das erste Flugobjekt auf derselben Flugbahn oder auf einer parallelen Flugbahn dem zweiten Flugobjekt S2 voraus fliegt. Beide Flugobjekte S1, S2 weisen eine Sensoreinrichtung SE, einen Datenspeicher ST und eine Steuerung CTR auf, die jeweils untereinander verbunden sind. Die Steuerung CTR ist ausgestaltet, den Betrieb der Sensoreinrichtung SE und des Datenspeichers ST zu steuern.

Während des Betriebes des Flugobjekts S1 oder S2 (die z.B. Satelliten auf einer Umlaufbahn um die Erde sind) werden von der Sensoreinrichtung SE Messwerte von elektromagnetischer Strahlung aufgenommen, die auf die Sensoreinrichtung SE einfällt. Z.B. weist die Sensoreinrichtung SE eine Vielzahl von Sensoren auf, die jeweils Strahlung in schmalbandigen Frequenzbereichen des Strahlungsspektrums detektieren. Dabei sind die möglichen Frequenzbereiche nicht auf das für Menschen sichtbare Spektrum beschränkt.

Die Steuerung CTR steuert insbesondere den Beginn und die Dauer einer wiederholten Aufnahme von Messwerten durch die einzelnen Sensoren, gibt vor, welche Sensoren Messwerte aufnehmen, und steuert die Blickrichtung der Sensoren oder der Sensoreinrichtung (d.h. die Richtung bzw. der Raumwinkelbereich, aus dem Strahlung auf den Sensor einfällt).

Ferner steuert die Steuerung CTR, welche Messwerte in dem Datenspeicher ST gespeichert werden. Z.B. können aufgenommene Messwerte unmittelbar von der Sensoreinrichtung SE zu der Steuerung CTR (z.B. in eine Datenverarbeitungseinheit) übertragen werden und dort eine Vorauswertung und/oder Vorverarbeitung stattfinden. Als Ergebnis werden beispielsweise nur ausgewählte, brauchbare und/oder weiterverarbeitete Daten von der Steuerung CTR zu dem Datenspeicher ST übertragen und dort gespeichert. Alternativ oder zusätzlich kann die Steuerung CTR steuern, welche Daten direkt von der Sensoreinrichtung SE zu dem Datenspeicher übertragen werden.

Bei einer möglichen Ausführungsform werden in dem Datenspeicher ST des ersten Flugobjektes S1 Messdaten eines potentiellen Zielgebiets (z.B. Land- und/oder Wasserfläche an der Erdoberfläche) gespeichert und bei Funkkontakt zu einer Bodenstation GS übertragen. Dort wird ausgewertet, ob das Zielgebiet oder Teile davon verdeckt sind (z.B. durch Wolken in der Atmosphäre des Planeten). Abhängig von dem Ergebnis sendet die Bodenstation GS Informationen und/oder Steuerbefehle an das zweite Flugobjekt S2, das dementsprechend die eigentlichen (zweiten) Fernerkundungsdaten gewinnt.

Modifikationen der in Fig. 7 gezeigten Anordnung sind insbesondere entsprechend den oben anhand von Fig. 1 bis Fig. 6 beschriebenen Ausführungsformen des Verfahrens möglich. Beispielsweise entfällt im Beispiel gemäß Fig. 6 das erste Flugobjekt S1 oder besteht im Fall der Fig. 5 eine direkte Übertragungsverbindung zwischen dem ersten Flugobjekt S1 und dem zweiten Flugobjekt S2.

### Literaturangaben:

Die folgenden Literaturangaben beziehen sich insbesondere auf die Detektion von Wolken, die Klassifizierung von Wolkenbedeckungen sowie auf die Unterscheidung von bedeckten Zielgebieten und wolkenfreien Zielgebieten. Die in der folgenden Literatur beschriebenen Verfahren können bei der Auswertung der ersten Fernerkundungsdaten angewendet werden. Sie werden hiermit vollinhaltlich in dieser Beschreibung miteinbezogen:
Irish, R.R. (2000): Landsat 7 Automatic Cloud Cover Assessment.- In: Algorithms for Multispectral, Hyperspectral, and Ultraspectral Imagery VI (Editor: S.S. Sylvia and M.R. Descour), Proc. SPIE (4049), S. 348-355.
Xu, Q.; Wu, W. (2003): ACRES Automatic Cloud Cover Assessment of Landsat 7 Images.- In: Spatial Sciences Conference, Canberra 23 - 26 September 2003.- 10 S.

## Patentansprüche

1. Verfahren zum Gewinnen von Fernerkundungsdaten, insbesondere durch einen Satelliten, wobei
a) eine erste Sensoreinrichtung (SE) verwendet wird, die erste Fernerkundungsdaten erzeugt,
b) eine schwenkbare zweite Sensoreinrichtung (SE) verwendet wird, die zweite Fernerkundungsdaten erzeugt,
c) durch Auswertung der ersten Fernerkundungsdaten ermittelt wird, ob und/oder bis zu welchem Grad Daten eines Zielgebiets und optional möglicher Ausweichziele, von dem bzw. denen durch die zweite Sensoreinrichtung die zweiten Fernerkundungsdaten aufgenommen werden sollen, nutzbar sind, und
d) ein Aufnahmegebiet, von dem die zweiten Fernerkundungsdaten aufgenommen werden, durch Schwenken der zweiten Sensoreinrichtung eingestellt wird.

2. Verfahren nach dem vorhergehenden Anspruch, wobei abhängig von dem Ergebnis der Auswertung der ersten Fernerkundungsdaten ein Zielgebiet für eine Aufnahme der zweiten Fernerkundungsdaten ausgewählt, eingeschränkt, erweitert, verlegt und/oder in sonstiger Weise beeinflusst wird.

3. Verfahren nach einem der vorhergehenden Ansprüche, wobei die erste Sensoreinrichtung (SE) eine erste Schwadbreite aufweist, die eine Breite eines Gebiets ist, das von der ersten Sensoreinrichtung (SE) erfasst wird, und wobei das Aufnahmegebiet eine Schwadbreite hat, die kleiner als die erste Schwadbreite ist.

4. Verfahren nach einem der vorhergehenden Ansprüche, wobei die zweite Sensoreinrichtung (SE) so verschenkbar ist, dass das Aufnahmegebiet innerhalb der ersten Schwadbreite liegen kann.

5. Verfahren nach einem der vorhergehenden Ansprüche, wobei abhängig von dem Ergebnis der Auswertung der ersten Fernerkundungsdaten ein Zeitpunkt und/oder ein Zeitraum einer Aufnahme der zweiten Fernerkundungsdaten bestimmt wird.

6. Verfahren nach einem der vorhergehenden Ansprüche, wobei bei der Auswertung der ersten Fernerkundungsdaten eine Bildmatrix verwendet wird, die einem aus den ersten Fernerkundungsdaten erzeugten Bild entspricht, wobei die Bildmatrix Informationen darüber enthält, welcher Bereich oder welche Bereiche des Bildes nicht oder nur eingeschränkt nutzbar sind und wobei aus diesen Informationen zumindest ein Maß dafür ermittelt wird, wie groß zumindest ein anderer, nutzbarer Bildbereich ist.

7. Verfahren nach einem der vorhergehenden Ansprüche, wobei das Zielgebiet zur Gewinnung der ersten Fernerkundungsdaten von einem ersten Objekt überflogen wird, wobei das erste Objekt die erste Sensoreinrichtung aufweist und wobei das Zielgebiet danach von einem zweiten Objekt überflogen wird, das die zweite Sensoreinrichtung aufweist.

8. Verfahren nach dem vorhergehenden Anspruch, wobei das zweite Objekt das erste Objekt dauerhaft verfolgt.

9. Verfahren nach dem vorhergehenden Anspruch, wobei Steuersignale zur Steuerung der Gewinnung der zweiten Fernerkundungsdaten und/oder Informationen, aus denen sich die Steuersignale gewinnen lassen, direkt von dem ersten Objekt zu dem zweiten Objekt übertragen werden.

10. Anordnung zum Gewinnen von Fernerkundungsdaten, insbesondere durch einen Satelliten, wobei die Anordnung folgendes aufweist:
a) eine erste Sensoreinrichtung (SE), die ausgestaltet ist, erste Fernerkundungsdaten zu erzeugen,
b) eine schwenkbare zweite Sensoreinrichtung (SE), die ausgestaltet ist, zweite Fernerkundungsdaten zu erzeugen,
c) eine Auswertungseinrichtung (GS), die ausgestaltet ist, durch Auswertung der ersten Fernerkundungsdaten zu ermitteln, ob und/oder bis zu welchem Grad Daten eines Zielgebiets und optional möglicher Ausweichziele, von dem bzw. denen durch die zweite Sensoreinrichtung die zweiten Fernerkundungsdaten aufgenommen werden sollen, nutzbar sind, und
d) eine Steuereinrichtung (CTR), die ausgestaltet ist, abhängig von einem Ergebnis der Auswertung ein Aufnahmegebiet, von dem die zweiten Fernerkundungsdaten aufgenommen werden, durch Steuern einer Schwenkstellung der zweiten Sensoreinrichtung einzustellen.

11. Anordnung nach dem vorhergehenden Anspruch, wobei die erste Sensoreinrichtung (SE) eine erste Schwadbreite aufweist, die eine Breite eines Gebiets ist, das von der ersten Sensoreinrichtung (SE) erfasst wird, und wobei das Aufnahmegebiet eine Schwadbreite hat, die kleiner als die erste Schwadbreite ist.

12. Anordnung nach einem der vorhergehenden Ansprüche, wobei die zweite Sensoreinrichtung (SE) so verschenkbar ist, dass das Aufnahmegebiet innerhalb der ersten Schwadbreite liegen kann

13. Anordnung nach einem der vorhergehenden Ansprüche, mit einem ersten Objekt, das ausgestaltet ist, das Zielgebiet zur Gewinnung der ersten Fernerkundungsdaten zu überfliegen, wobei das erste Objekt (S1) die erste Sensoreinrichtung (SE) aufweist, und mit einem zweiten Objekt (S2), das ausgestaltet ist, das Zielgebiet zur Gewinnung der zweiten Fernerkundungsdaten zu überfliegen, wobei das zweite Objekt (S2) die zweite Sensoreinrichtung (SE) aufweist, wobei das erste Objekt (S1) und das zweite Objekt (S2) derart relativ zueinander angeordnet sind, dass das Zielgebiet zuerst von dem ersten Objekt (S1) und danach von einem zweiten Objekt (S2) überflogen wird.

14. Anordnung nach dem vorhergehenden Anspruch, wobei das erste Objekt die Auswertungseinrichtung zur Auswertung der ersten Fernerkundungsdaten aufweist, wobei das erste Objekt die Steuereinrichtung zur Steuerung der Gewinnung der zweiten Fernerkundungsdaten aufweist und wobei das erste Objekt und das zweite Objekt eine Übertragungseinrichtung zur Übertragung von Steuersignalen der Steuereinrichtung zu dem zweiten Objekt aufweisen.
